# EUROPEAN PATENT APPLICATION

(11) **EP 1 553 416 A1**
(43) Date of publication of application: **13.07.2005**
(21) Application number: 03740521.4
(22) Date of filing: 15.07.2003
(51) Int. Cl.: G01N 35/02

(54) **ROTARY SUPPORT AND APPARATUS USED FOR THE MULTIPLE SPECTROSCOPIC CHARACTERISATION OF SAMPLES OF SOLID MATERIALS**

(30) Priority: 16.07.2002 ES 200201760
(71) Applicant: CONSEJO SUPERIOR DE INVESTIGACIONES CIENTIFICAS, 28006 Madrid (ES); UNIVERSIDAD POLITECNICA DE VALENCIA, 46022 Valencia (ES)
(72) Inventor: Corma Canos, Avelino, Univ. Pol. de Valencia, E-46022 Valencia (ES); Serra Alfaro, José Manuel, Univ. Pol. de Valencia, E-46022 Valencia (ES)
(74) Representative: Ungria Lopez, Javier
(86) International application number: PCT/ES2003/000365
(87) International publication number: WO 2004/010147

(57) **Abstract**

The invention relates to a rotary support which is used to support numerous samples of solid materials so that said materials can be characterised by means of electroscopy. The inventive support is provided with housings, with a sample being deposited in each housing, and a sample-bearing surface comprising the aforementioned sample housings, each housing being located in a pre-determined position. Said support can be used in an apparatus comprising means of applying controlled radiation to the samples, means of detecting and registering at least one first effect produced by the radiation on the samples, means of controlling at least one parameter of the apparatus, said parameter being selected from temperature, pressure and atmosphere, and actuation means which are used to rotate the support in a controlled manner.

## Description

### SECTOR OF THE ART

The present invention belongs to the field of spectroscopic techniques and is particularly applicable to the sector of characterisation of samples of solid materials, and especially the analysis of solid catalysts.

### STATE OF THE ART

In the development of new materials, characterisation techniques based on spectroscopic techniques are of great importance, both in the field of fundamental research and in that of applied research. In this way, it is possible to investigate certain physical/chemical properties derived from the later analysis of the results of spectroscopic characterisation (ultraviolet, infrared, Raman, X-ray). Of special interest is the area of studying the surface of solid materials for the catalysis of chemical reactions. The study of the surface of catalytic materials is of great help when it comes to the design, development and optimisation of new catalysts of industrial interest.

In recent years, the development of new accelerated techniques of catalytic testing is being a revolution in the field of heterogeneous catalysis, a field known as combinatory chemistry (Senkan, S.M., Nature, vol. 394 pp. 350-353; Senkan, S.M. and Ozturk, S., Angewandte Chemie Int. Ed. 1999, 38, No 6, pp. 791-794; Cong, P. et al., Angewandte Chemie Int. Ed. 1999, 38, No 4, pp. 483-488; Senkan, S.M., Angewandte Chemie Int. Ed. 2001, No 40, pp. 312-329), which are contributing innovative units and methods (US-A-5.959.297, US-A-6.004.617 and WO-A-99/21957) for the rapid and simultaneous testing of libraries of catalysts.

Nevertheless, there exists the need to find new accelerated techniques for the physical/chemical characterisation of these materials in order to be able to achieve a greater fundamental knowledge of their nature and consequently improve the development and optimisation process of these materials for a certain application.

### DESCRIPTION OF THE INVENTION

The present invention provides a support and an apparatus for the multiple characterisation of solid materials by means of spectroscopic techniques, with very small quantities of those materials being needed, which permits to increase the number of new materials to be characterised.

In accordance with the invention, the support for the multiple spectroscopic characterisation of solid materials comprises
a plurality of housings for the depositing of at least one sample in each housing,
a flat support with a sample-bearing surface containing the housings for the samples, with each housing being defined in a pre-determined position, and
means of reversible coupling of the support to the actuation means in order to confer a controlled rotary movement for the support,
the support having a horizontal extension at least two and a half times greater than its height.

According to the invention, at least part of the housings can be distributed on the sample-bearing surface, sectorially and/or in a spiral and concentrically around a rotating axis of the support.

At least part of the housings can in turn be defined by depressions and/or between partitions projecting from the sample-bearing surface, thereby permitting the samples to be housed in pre-determined housings.

In an embodiment of the support of the present invention, at least part of the samples are deposited in the housings in the sample-bearing surface in the form of a fine film of solids, applied for example by means of a deposition technique selected from among serigraphy, lithography, microserigraphy, microlithography and combinations thereof. In another embodiment of the invention, at least part of the samples have been deposited in the housings of the sample-bearing surface in the form of microdrops, which comprise solutions of solids, said microdrops being able to be applied by means of an injection technique.

According to a preferred embodiment of the inventive support, this displays a flat circular configuration, such as for example that of a blank compact disc (CD-ROM), and is manufactured in material suitable for resisting the temperatures that are applied when it comes to analysing the samples deposited on it without deforming or undergoing any changes in its structure. A support useful for almost the entire range of temperatures that are applied in tests and chaxacterisations of this type can be manufactured in a heat-resistant material at temperatures between -200 to 500 °C.

Analogously to the plastic transparent coating displayed by compact discs, in an embodiment of the support of the present invention, the sample-bearing surface housing the sample or samples to be analysed, can be coated with a transparent protective film, preferably of plastic material capable of resisting the temperatures which the samples are subjected to.

Moreover, the invention also refers to an apparatus for the characterisation by irradiation of the solid materials deposited on a support of the type described earlier, wherein the apparatus comprises
means of irradiation for applying at least one controlled radiation to the samples
means of detecting and registering at least one first effect produced by the radiation on the samples arranged in the support
control means for controlling at least one parameter of the apparatus selected from among temperature, pressure and chemical composition of the atmosphere in contact with the samples,
actuation means for conferring a controlled rotary movement to at least one support.

This apparatus permits irradiation of a material, detecting and registering of the effect of the radiation on a first material arranged on the support in a first position, after which the support is made to rotate until a second material is located beneath the radiation beam, and the process is repeated again. In the event of operation by reflectance, the intensity of the light reflected by each material after being irradiated is detected and registered.

In an embodiment of the inventive apparatus, the control means comprise means of thermal regulation suitable for maintaining the samples at a temperature in the range from -200 °C to 500 °C. An apparatus capable of operating in this temperature range has application for all types of characterisation conditions.

The control means can also comprise means of regulation of gaseous fluids for regulating the composition of gaseous fluids in contact with the surface of the support and/or of the samples.

As will be detailed further below in this description, the apparatus of the present invention can also comprise
* magnetising means for being able to subject the samples to a constant and/or variable magnetic field; and/or
* means of irradiation designed for irradiating the samples with electromagnetic waves, electrons, other types of particle and combinations thereof; and/or
* means of irradiation comprising at least one laser beam emitter device preferably including means of adjustment for adjusting the emission frequency or the range of emission frequencies of the laser beams; and/or
* generator means of monochromatic light; and/or
* generator means of polarised light; and/or
* an optical system for decomposing light into different wavelengths included in the means of detecting and registering.

The support and apparatus of the invention permit an advantageous system to be produced permitting the efficient characterisation of solid materials. So, the support can house on its surface a plurality of material samples, these being in the form of adhered films of different thicknesses, powders of varied granulometry or pellets, with the surface being able to be conveniently shaped for housing the plurality of solids. In the event that the materials are in the form of a film, the different materials can be manufactured/deposited continuously, in such a way that the support is coated with a film whose composition varies as a function of position. The preferred geometry for the support is similar to that of a compact disc.

The deposition methods are preferably those based on methods of serigraphy-lithography (microserigraphy), with which fine films of materials (inks) can be manufactured with very varied compositions and very precise forms. These techniques are well known and described (US2001/002277 Al, US 5,143,854 and EP 1129773). The use of ink-jet printing techniques used in the ink-jet type of printer is of application for the deposition of films of solids (US 5,449,754), in such a way that microdrops of different solutions are deposited for the synthesis of solid materials.

The term CD or compact disc format (L. Boden, "Mastering CD-ROM Technology", John Wiley & Sons (1995)), which is being used in this specification, must be understood as a class of circular disc housing on its surface an array of solid materials which can be distributed in a concentric or spiral form. This term does not aim to limit the characteristics of the discs or supports, namely, dimensions, formatting, spacing between solids, to those possessed by commercial CD-ROMs (US 4,719,615). The analogy with CD-ROM type digital supports is made here by convenience in order to illustrate the advantages and field of utilities with regard to methods of characterisation of solid materials by spectroscopy that are currently used (US 5,471,455).

The disc can require some kind of pre-forming in order to define the grooves, sectors, frames, addresses and other characteristics necessary for housing the solid materials in an ordered and standardised way. These characteristics can permit the detecting of errors in the deposition of the materials on the disc and during the reading, the detecting of data on the distribution on the support and its content, and they permit the control and synchronisation of the computerised reading process (irradiation and detection). A wide variety of data formats in CD is available, and the present invention considers the use of any of these or other methods permitting the location of the different materials on the support.

The material of the support (disc) can be at least partially made either of a material which permits light to be transmitted through it, or of a reflecting material (like a mirror) which only reflects the incident beam without producing any other type of modification to it. When the surface of the support is reflecting, this enables a double irradiation to be carried out on the material to characterise, permitting duplication of the effect to be quantified which the light beam undergoes owing to the nature of the material traversed.

Materials of different nature can be used for this effect: amorphous or crystalline ceramic inorganic materials, such as for example silica, alumina or silicon carbide; materials of a metallic nature, such as for example gold, steel alloys, aluminium or titanium;: materials of an organic nature, such as all kinds of polymer materials of organic molecules, for example, polycarbonate, PTFE or epoxy resins.

The capacity of modern mechanical/optical systems for directing and locating a beam of light onto very small surfaces with great precision makes it possible the irradiation, in a selective and reproducible way, of around 10⁹ individual positions on a single disc of about twelve centimetres in diameter, as is the case of the system used for reading compact discs (CDs). Therefore, in spite of the information being repeated ten times on each CD-ROM in order to correct writing and noise errors, current laser beam directing systems permit irradiation with a precision of the order of 108 different solid materials on a single support of compact disc format.

In an embodiment of the present invention, a support, preferably flat, and more preferably of compact disc format, described above, on whose surface a plurality of solid materials has been synthesised or deposited, is rotated while a laser beam sweeps the surface as the beam performs a radial movement. The radial position of the light beam (laser), the angular position of the support and the type of laser radiation (range of frequencies, intensity, polarisation) are controlled by a computer, which manages the reading process (characterisation) and processes the information obtained.

For the precise rotary movement of the support, means might be necessary such as motors known as steppers. Also, for the movement of the laser beam mechanical and optical means are necessary for ensuring the control and precision of the irradiated position at all times.

The area or surface of each material to be characterised will be determined by the degree of focusing that can be achieved, which depends on the focal length of the lenses and the distance from the lenses to the material surface.

The light beam passes through the translucent support and the outgoing beam can be detected. Prior to this detection, this outgoing beam can be decomposed via optical means for separately detecting the different frequencies making up that outgoing beam. The multiple spectroscopic characterisation process is based on the fact that light passing through the solid material undergoes changes which depend on the actual nature of that material and/or due to the presence of molecules adsorbed by it. This change is determined by a suitable detector and, later on, it can be converted into digital signals which are processed and stored by a computer. The properties that can be altered in a beam of light are its intensity, polarisation angle, wavelength and phase.

In another application of the present invention, the laser beam can be linearly polarised and the fluorescence polarisation of a material can be detected.

When a light beam passes through a material it can experience changes in its phase due to the change in refractive index of the material compared to air. This type of change in the phase of the electromagnetic wave can be detected by interferometry (US 5,413,939). This is the functioning principle of modern CD-ROMs readers and audio compact discs readers, which are based on interferometry methods for distinguishing between pits and lands (US 5,471,455).

Another mode of functioning of the present system consists of measurement of the materials fluorescence, in other words, of causing radiation to impinge on the material and then detecting the radiation emitted by the solid when it ceases to be irradiated. This can be carried out by, for example, CCDs (charge-coupled devices) (US 6,339,633, US 6,335,757 or EP 1168833) or with a photocell (example of the "GeneArray" reader from Hewlett Packard (Palo Alto, CA)).

The reading signal in response to the irradiation of the different materials can be corrected with blanks to avoid the influence of the support material. For the case of commercial reading systems for music compact discs and CD-ROMs, EFM coding (eight to fourteen modulation) is used.

The frequency or range of frequencies of the laser radiation will be chosen depending on the type of characterisation it is wished to perform. For example, a particular frequency can be chosen in the infrared light range for studying certain OH bonds present in a material. Similarly, by means of using different frequencies, either with the use of different lasers (simultaneously or sequentially) or with the use of one laser of adjustable frequency, it is possible to perform a more complete characterisation. Also having application for the means of radiation of the present invention are laser devices capable of generating radiation with broad ranges of wavelengths, such as for example the laser device which emits in the infrared region described by C. Gmachi et al. (Nature, vol. 415, 883-887 (21 Feb 2002)). The use of electromagnetic waves of any frequency, including ultraviolet, infrared, visible light, X-rays, etc is considered.

The present invention comprises the application of X-ray fluorescence characterisation techniques. By means of these techniques it is possible to estimate the composition of the library of materials supported.

In the case of application of radiation pulses, the intensity and duration, in other words, the power and pulse length, required, will depend on numerous factors such as nature of the materials to characterise, system and mode of detecting, speed of rotation of the support, area of the material, etc.

A notable aspect of the present invention is the possibility of effecting the radiation process when the support with the different solid materials is to be found in the presence of a particular atmosphere (gases, vapours) which can be static or renewed thanks to a stream of those gases or vapours. In this way, it is also possible to conduct an in situ monitoring of the interaction of the solid with the different molecules, and even whether there exists a chemical reaction, and to make an indirect determination of the catalytic activity of each of the plurality of materials. For this effect, the system is provided with the necessary means for being able to control and regulate the temperature of the materials, as well as the means for regulating the pressure (vacuum or overpressure) in the chamber where the support with the materials is located. In this way, it is possible to use probe molecules, which enable a study of the interaction of the different solids with them to be made, a technique that is commonly used for studies of acidity, basicity, etc.

Likewise, the means for regulating the temperature, pressure and type of atmosphere that the materials are in can be of use for different physical/chemical treatments of the array of materials prior to the spectroscopic characterisation.

Another embodiment of the present invention considers the possibility of measuring the electron emission (ionisation) as a response to a laser irradiation, when the support is subjected to a particular electric field (constant or variable). This is possible simply by placing an electrode at a certain distance from the support (with a certain potential difference being applied between them) and measuring the electron current generated when radiation (laser) is shone on the materials. Also of interest is the possibility of measuring the kinetic energy (eV) with which the electrons are released from the surface. Moreover, it is also possible to measure the radiation reflected/absorbed or fluorescence. This type of test would provide information on the ease with which the material loses electrons, which is correlated to its catalytic activity in certain chemical reactions.

### BRIEF DESCRIPTION OF THE FIGURES

Given below is a description of the characteristics of embodiments of the present invention on the basis of certain figures, wherein
figure 1 is a schematic plan view of a support according to a first embodiment of the invention;
figure 2 is a schematic view in transverse cross-section through line A-A' appearing in figure 1;
figure 3 is a schematic plan view of a support according to a second embodiment of the invention;
figure 4 is a schematic view in transverse cross-section through line B-B' appearing in figure 2;
figure 5 is a schematic plan view of a support according to a third embodiment of the invention;
figure 6 is a schematic view in transverse cross-section through line C-C' appearing in figure 5;
figure 7 is a schematic view in expanded transverse cross-section of detail D shown in figure 6;
figure 8 is a schematic view in cross-section of an apparatus of the invention according to a first embodiment;
figure 9 is a schematic view in cross-section of an apparatus of the invention according to a second embodiment;
figure 10 is a schematic view in cross-section of an apparatus of the invention according to a third embodiment;

In these figures, there appears a plurality of numerical references in order to identify the following elements:
1 support
1a sample-bearing surface of the support
1b coating for the sample-bearing surface
2 central mounting hole for the support
3a housings for samples, in the form of point depressions in the sample-bearing surface, sectorially arranged in the support
3b housings for samples, in the form of semicircular depressions in the sample-bearing surface, sectorially arranged in the support
3c housings for samples, in the form of spiral grooves in the sample-bearing surface, sectorially arranged in the support
3d partitions between housings
3e separations between housings
4 samples
5 apparatus
6 interior chamber of the apparatus
7 means of irradiation
7a means of radial displacement for the means of irradiation
8 means of detecting and registering
8a means of radial displacement for the means of detecting and registering
9a means of thermal regulation
9b means of regulation for gaseous fluids
9c gas outlet
10a actuation motor
10b actuation mechanism
10c actuation rod
11 magnetising means

### MODES OF EMBODYING THE INVENTION

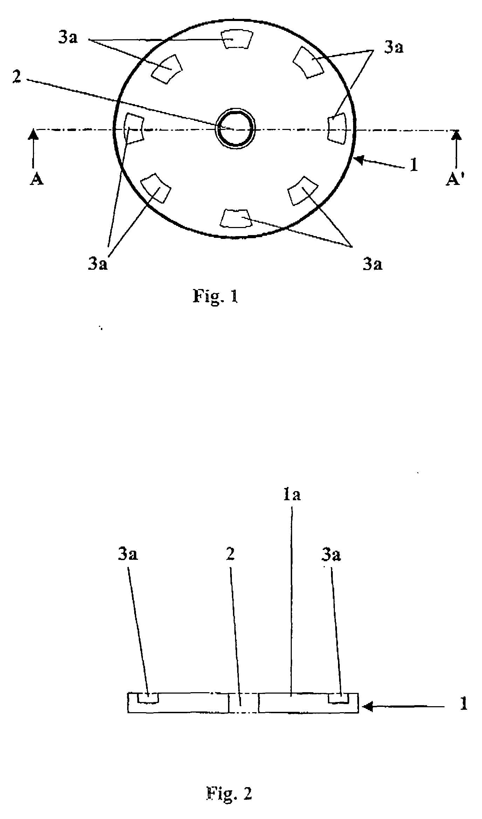

As can be seen, figures 1 to 9 of this patent application illustrate various embodiments and aspects of supports carried out in accordance with the present invention.

So, figures 1 and 2 show a first embodiment wherein the support 1 is a flat disc displaying a sample-bearing surface 1a in which various housings 3a are provided for samples in sectors which sectorially and radially surround the reversible means of coupling of the support to the actuation means in order to confer controlled rotary movement to the support, consisting of a central hole 2.

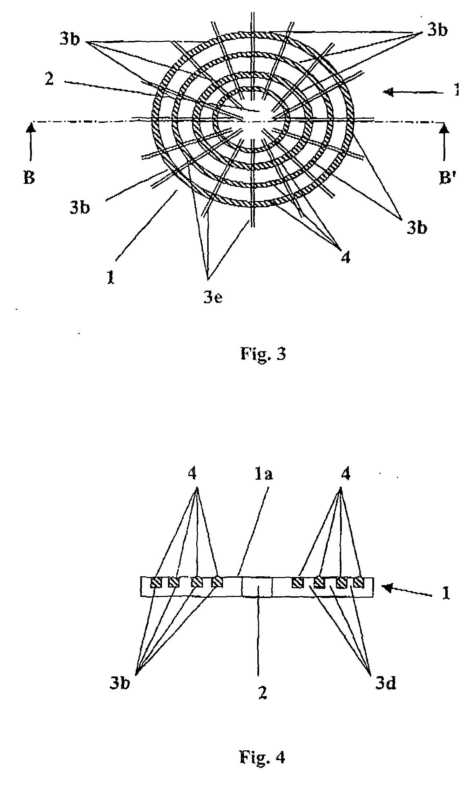

Figures 2 and 3 show a second embodiment of the support 1 in the form of a flat disc in which the housings 3b for the different samples 4 are formed by a series of semicircular depressions concentrically arranged in the sample-bearing surface 1a around the central mounting hole 2. The housings 3b are separated from each other by partitions 3d and by separations 3e.

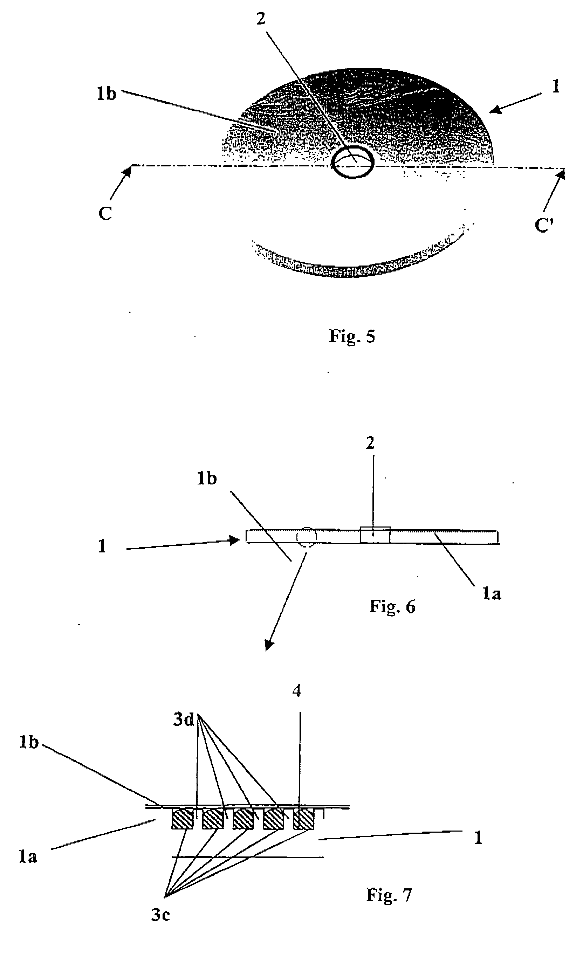

Figures 5, 6 and 7 show a third embodiment of the support 1, in accordance with which embodiment the sample-bearing surface 1a of the support 1 is coated with a transparent coating 1b. In the embodiment shown in these figures, the different samples 4 are arranged in housings 3c of a spiral groove around the central hole 2, the grooves being demarcated from each other by means of the separation partition 3d. The coating 1b is manufactured from a material capable of resisting the temperatures and other conditions of the tests to which the samples 4 are subjected, and of not interfering negatively with the irradiation applied in those tests.

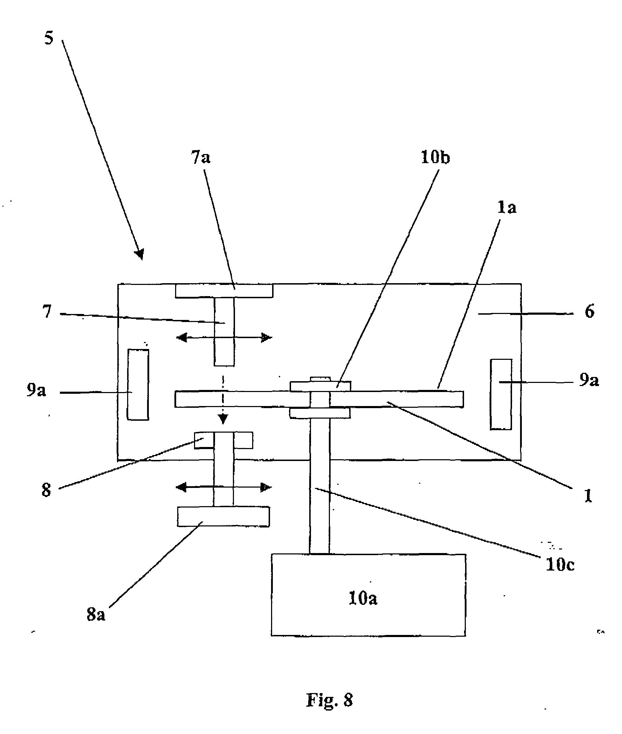

Figures 8, 9 and 10 show embodiments of the apparatus 5 for the characterisation by irradiation, designed for carrying out tests of samples 4 arranged in the supports 1 in the flat disc form of the invention.

Figure 8 illustrates an apparatus 5 consisting of an interior chamber 6 wherein thermal regulation means 9a are provided along with means of irradiation 7 arranged in first means of radial displacement 7a emerging from the roof of the chamber 6. In the lower part of the chamber 6 and in a position facing that of the means of irradiation 7, certain means of detecting and registering 8 emerge upwards, arranged in second means of radial displacement 8a which are able to displace in a synchronised way the means of irradiation 7 , by the means of detecting and registering 7a. In this way, the radiation emitted by the means of irradiation 7 will at all times be gathered by the means of detecting and registering 8.

Among the means of irradiation 7 and the means of detecting and registering 8 is to be found a transparent support 1, coupled to a coupling mechanism 10b provided in the upper end of an actuation rod 10c actuated by an actuation motor 10a.

The means of irradiation 7, the means of detecting and registering, the means of thermal regulation 9a, the means of radial displacement 7a,8a and the motor 10a are connected to a control system (not shown in the figures) which controls the parameters of these elements according to the test being conducted and according to the various samples found in predetermined housings in the sample-bearing surface 1a of the support 1.

To conduct the test, the actuation motor 10a rotates the support 1 and the means of irradiation 7 are displaced from right to left, or vice versa, in a way that is synchronised with the means of detecting and registering 8, along a radius of the support 1, in such a way that, by means of rotation of the support 1, each sample passes between the means of irradiation 7 and the means of detecting and registering 8, so that all the samples are subjected to the evaluation. Given that the control system knows the location and type of each sample, it will be able to make an individual evaluation of each irradiated sample.

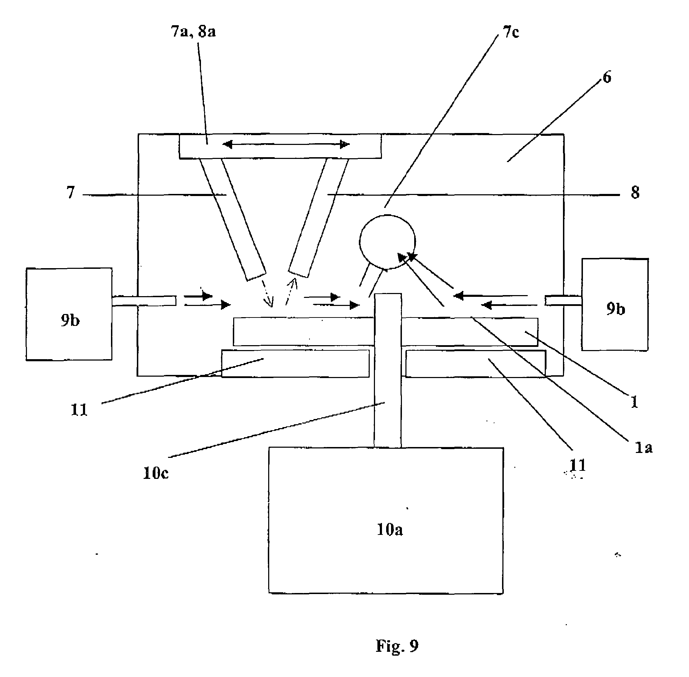

The embodiment of the apparatus 5 shown in figure 9 is designed in order to evaluate samples by reflection of radiation, and comprises the same basic elements as the embodiment shown in figure 8, with the exception that the means of thermal regulation are not shown and with the difference that the means of irradiation 7 and the means of detecting and registering are arranged in means of radial displacement 7a,8a. Also, the embodiment of apparatus 5 shown in figure 9 schematically illustrates means of regulation 9b,9c for gaseous flows and magnetising means 11. These means are also governed by the control system described earlier.

As can be seen, the means of irradiation 7 are arranged in such a way that the radiation 7 impinges in an inclined manner on the sample-bearing surface 1a from where it is reflected towards the means of detecting and registering 8. The magnetising means 11 arranged beneath the support 1 can, depending on the conditions provided for the test, create a certain magnetic field in order to modify the effect of the radiation on the material or vice versa.

The regulation system 9b,9c for gaseous flows introduces the fluid, such as for example an inert gas, into the interior chamber 6 and evacuates the fluid though the gas outlet 7.

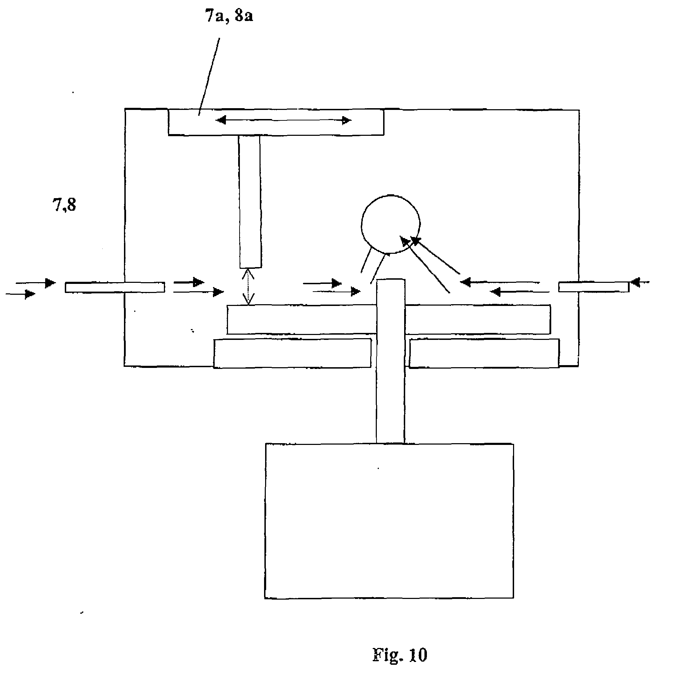

The embodiment of the apparatus 5 shown in figure 10 is differentiated from that of figure 9 only in that the means of irradiation 7 and the means of detecting and registering 8 are combined into a single element arranged perpendicularly to the sample-bearing surface la, in such a way that the radiation reflected perpendicularly by the sample-bearing surface has the same path as the incident radiation beam, until the reflected beam is separated from the incident radiation by optical means and detected.

## Claims

1. A rotary support for supporting a plurality of samples of solid materials for the characterisation of said materials by spectroscopy, **characterised in that** it comprises
a plurality of housings for the direct depositing of at least one sample in each housing,
a flat support with a sample-bearing surface containing the housings for the samples, with each housing being defined in a pre-determined position, and
means of reversible coupling of the support to the actuation means in order to confer a controlled rotary movement to the support,
the support having a horizontal extension at least two and a half times greater than its height.

2. A support according to claim 1, **characterised in that** at least part of the housings are distributed sectorially on the sample-bearing surface.

3. A support according to claim 1 or 2, **characterised in that** at least part of the housings are distributed in a spiral and concentrically on the sample-bearing surface around a rotating axis of the support.

4. A support according to any of claims 1 to 3, **characterised in that** at least part of the housings are defined by depressions in the sample-bearing surface.

5. A support according to any of claims 1 to 4, **characterised in that** at least part of the housings are defined between partitions (3d) projecting from the sample-bearing surface.

6. A support according to any of claims 1 to 5, **characterised in that** at least part of the samples are deposited in the housings in the sample-bearing surface in the form of a fine film of solids.

7. A support according to claim 6, **characterised in that** the fine film has been applied by means of a deposition technique selected from among serigraphy, lithography, microserigraphy, microlithography and combinations thereof.

8. A support according to any of claims 1 to 5, **characterised in that** at least part of the samples have been deposited in the housings of the sample-bearing surface in the form of microdrops, which include solutions of precursor compounds which will form solids.

9. A support according to claim 8, **characterised in that** the microdrops have been applied by means of an injection technique.

10. A support according to any of claims 1 to 9, **characterised in that** the support consists at least partially of a material transparent to certain electromagnetic waves.

11. A support according to any of claims 1 to 10, **characterised in that** the support consists at least partially of a reflecting surface.

12. A support according to claim 11, **characterised in that** the reflecting material reflects an incident light beam without modifying that beam.

13. A support according to any of claims 1 to 12, **characterised in that** the support is a flat circular support.

14. A support according to any of claims 1 to 13, **characterised in that** the support has the format of a blank compact disc.

15. A support according to any of claims 1 to 14, **characterised in that** it is manufactured in a material heat-resistant at temperatures between -200 to 500 °C.

16. An apparatus for the characterisation by irradiation of solid materials arranged in a support according to any of claims 1 to 14, **characterised in that** it comprises
means of irradiation for applying at least one controlled radiation to the samples,
means of detecting and registering of at least one first effect produced by the radiation on the samples arranged in the support,
means of control for controlling at least one parameter of the apparatus selected from among temperature, pressure and chemical composition of the atmosphere in contact with the samples,
actuation means for conferring the controlled rotary movement to at least one support.

17. An apparatus according to claim 16, **characterised in that** the control means comprise means of thermal regulation suitable for maintaining the samples at a temperature in a range from -200 °C to 500 °C.

18. An apparatus according to claim 16, **characterised in that** the control means comprise means of regulation of gaseous fluids for regulating the composition of gaseous fluids in contact with the sample-bearing surface of the support and/or of the samples.

19. An apparatus according to any of claims 16 to 18, **characterised in that** it comprises magnetising means for being able to subject the samples to a magnetic field.

20. An apparatus according to claim 19, **characterised in that** the magnetic field is constant.

21. An apparatus according to claim 19, **characterised in that** the magnetic field is variable.

22. An apparatus according to claim 16, **characterised in that** the means of irradiation are designed for irradiating the samples with radiation selected from among electromagnetic waves, electrons, other types of particle and combinations thereof.

23. An apparatus according to claim 16, **characterised in that** the means of irradiation comprise at least one laser beam emitter device.

24. An apparatus according to claim 23, **characterised in that** the laser beam emitter device includes means of adjustment for adjusting the emission frequency or the range of emission frequencies of the laser beams.

25. An apparatus according to claim 16, **characterised in** the means of irradiation are generator means of monochromatic light.

26. An apparatus according to claim 16, **characterised in that** the means of irradiation are generator means of polarised light.

27. An apparatus according to claim 16, **characterised in that** the means of detecting and registering comprise at least one optical system for decomposing light into different wavelengths.

28. An apparatus according to claim 16, **characterised in that** the means of irradiation are capable of producing precise pulses of radiation.

29. An apparatus according to claim 16, **characterised in that** the means of irradiation permit various samples to be simultaneously irradiated.
